# EUROPÄISCHE PATENTSCHRIFT

(11) **EP 4 342 694 B1**
(45) Veröffentlichungstag und Bekanntmachung des Hinweises auf die Patenterteilung: **23.04.2025**
(21) Anmeldenummer: 24155993.9
(22) Anmeldetag: 26.07.2021
(51) Int. Cl.: B60G 7/00

(54) **TRAGLENKER**
SUPPORTING ARM
BRAS DE SUSPENSION

(30) Priorität: 12.08.2020 DE 102020121231
(43) Veröffentlichungstag der Anmeldung: 27.03.2024
(62) Teilanmeldung aus: 21187787.3
(73) Patentinhaber: Benteler Automobiltechnik GmbH, 33102 Paderborn (DE)
(72) Erfinder: Meyer, Stephan, 33605 Bielefeld (DE); Hummelt, Jürgen, 33100 Paderborn (DE)
(74) Vertreter: Ksoll, Peter

(56) Entgegenhaltungen:
- CN-U- 203 460 639
- JP-A- 2002 337 525
- KR-U- 19980 037 783

## Beschreibung

Die Erfindung betrifft einen Traglenker gemäß den Merkmalen im Oberbegriff von Anspruch 1 oder 2.

Fahrwerkslenker gehören zur Radaufhängung eines Kraftfahrzeugs und nehmen fahrdynamische Kräfte auf. Durch die Lagerung werden die aufgenommenen Kräfte gedämpft und der Fahrkomfort erhöht. Die Fahrwerkslenker übernehmen sowohl radführende Aufgaben als auch die Übertragung von Feder-, Dämpfungs- und Stabilisierungskräften.

Abhängig von ihrer Aufgabe unterscheidet man Führungslenker, Traglenker und Hilfslenker. Führungslenker übernehmen die Führung des Rades, ohne das Fahrzeuggewicht abzustützen. An den Gelenken der Führungslenker werden hauptsächlich axiale Kräfte eingeleitet. Traglenker nehmen radiale Kräfte wie Brems- und Antriebskräfte auf. Zusätzlich stützen sie zusammen mit anderen Fahrwerkskomponenten die Gewichtskraft des Fahrzeugs ab. Traglenker weisen zusätzliche Krafteinleitungspunkte für Feder- und Dämpferkräfte auf. Hilfslenker haben die Aufgabe, die Führungs- und Traglenker untereinander oder bei speziellen Achskonstruktionen auch mit dem Radträger zu verbinden.

Fahrwerkslenker werden auch nach der Anzahl ihrer Anbindungspunkte unterschieden. Die einfachste Ausführung ist der Zweipunkt-Lenker. Ein solcher Fahrwerkslenker verfügt über je ein Kugelgelenk und ein Gummilager oder zwei Gummi- oder Hydrolager. Für die Verbindung des Radträgers mit der Karosserie an der Vorderachse werden immer Fahrwerkslenker mit Kugelgelenken eingesetzt. Diese ermöglichen die notwendige Bewegungsfreiheit zum Lenken des Rades.

Durch die DE 10 2010 010 665 B4 zählt ein Fahrwerkslenker zum Stand der Technik, der einen aus Metallblech gefertigten länglichen Lenkerkörper aufweist. Der Lenkerkörper weist an seinen beiden Längsenden jeweils eine Lageraufnahme auf.

Die DE 10 2008 015 393 C5 beschreibt einen Fahrwerkslenker bzw. ein Verfahren zu dessen Herstellung. Der Fahrwerkslenker ist von einer einteiligen Blechschale gebildet und weist einen U-förmigen Querschnitt auf, wobei die Blechschale als Formteil zweier Teilschalen und eines die Teilschalen verbindenden Rückens gebildet ist.

Auch die WO 2015/003769 A1 offenbart einen Fahrwerkslenker, aufweisend einen länglichen Lenkerkörper aus einem einstückigen Metallblech, der biegetechnisch umgeformt ist und zwei einander beabstandete gegenüberliegende Seitenwände besitzt. Die Seitenwände sind an ihren freien Längsseiten zumindest abschnittsweise miteinander verbunden. An seinen axialen Enden besitzt der Lenkerkörper jeweils eine Lageraufnahme.

Im Umfang der DE 10 2012 018 553 A1 wird ein Fahrwerkslenker offenbart mit einem radseitigen Gelenk und einem aufbauseitigen bzw. karosserieseitigen Gelenk sowie einem sich zwischen den Gelenken erstreckenden Lenkerkörper. Der Lenkerkörper ist aus einem Faserverbundkunststoff gebildet.

Ein Führungslenker mit einem Lenkerkörper in Schalenbauweise zählt durch die WO 2020/010199 A1 zum Stand der Technik. An einem ersten Ende des Lenkerkörpers ist eine Kugelgelenkschale angeordnet. Der Lenkerkörper ist aus Metallblech gebildet und weist einen Hohlkammerabschnitt auf. Die Kugelgelenkschale ist ein Schmiede- oder Gussteil aus Metall und weist einen Befestigungsfortsatz auf. Die Kugelgelenkschale greift mit dem Befestigungsfortsatz in den Hohlkammerabschnitt und ist mit dem Lenkerkörper gefügt.

In der DE 11 2010 001 366 T5 ist ein Radaufhängungsarm bzw. eine Radaufhängungsstrebe für ein Kraftfahrzeug beschrieben.

Weiterhin geht ein Lenker für eine Radaufhängung eines Kraftfahrzeugs aus der DE 10 2014 226 536 A1 hervor.

Die DE 10 2014 117 207 A1 erläutert einen Achslenker zur Festlegung an einem Achsrohr eines Nutzfahrzeugs.

Aus der US 8,690,176 B2 geht eine Radaufhängungskomponente in Form eines Fahrwerklenkers hervor. Dieser weist einen aus zwei Metallblechen gebildeten Lenkerkörper. An einem Längsende des Lenkerkörpers ist eine Kugelgelenkanordnung und an einem anderen Ende des Lenkerkörpers ein Schwenkzapfen vorgesehen. An einem Fortsatz des Lenkerkörpers ist eine Buchsenhülse festgelegt.

Die CN 203 460 639 U offenbart einen Traglenker entsprechend der jeweiligen Oberbegriffe der Ansprüche 1 und 2, wobei der Traglenker einen Lenkerkörper umfasst, welcher blattförmig und L-förmig ist. Der Lenkerkörper ist gebildet durch eine Blechschale, die umfangseitig eine umgeschlagene Kante aufweist. Dazwischen ist eine Verstärkungsplatte aufgenommen, die an die Form des Lenkerkörpers angepasst und L-förmig ist.

Ein Traglenker mit einer Kugelgelenkschale, die ein Schmiede- oder Gussteil ist und einen Befestigungsfortsatz aufweist, der in einen Hohlkammerabschnitt des Lenkerkörpers eingreift, geht aus der KR 1998 0037783 U hervor.

Weiterhin offenbart auch die JP 2002 337525 A einen Fahrwerkslenker.

Die vorliegende Erfindung betrifft einen Traglenker. Traglenker haben, wie bereits ausgeführt, die Funktion die beim Bremsen oder Beschleunigen entstehenden Drehmomente abzustützen und die aus einem Feder/Dämpfer-Element wirkenden Kräfte aufzunehmen. Es werden daher sehr hohe Anforderungen an die Steifigkeit eines Traglenkers, insbesondere in dessen Fahrzeughochrichtung gestellt. Daher werden Traglenker üblicherweise in einem Schmiede- oder Gussverfahren aus Stahl oder Aluminium gefertigt. Das radseitige Gelenk stellt die Verbindung zwischen Fahrwerkslenker zum Radträger über ein Kugelgelenk her. Das Kugelgelenk ist an einem Radträger befestigt. Das gegenüberliegende Lager, üblicherweise ein Gummilager oder ein Hülsenlager, ist an einem Achsträger befestigt. Eine zusätzliche Anbindungsstelle im Mittenbereich des Lenkerkörpers dient der Aufnahme eines Feder- oder Dämpferelements. Nachteilig sind die verfahrensbedingten hohen Produktionskosten und auch das Gewicht.

Der Erfindung liegt ausgehend vom Stand der Technik die Aufgabe zugrunde, einen im Bauteilgewicht verbesserten und herstellungstechnisch vorteilhaften einen Traglenker zu schaffen, der die Belastungsanforderungen, insbesondere die hohen Steifigkeitsanforderungen, zuverlässig erfüllt.

Zur Lösung dieser Aufgabe zeigt die Erfindung in den Ansprüchen 1 und 2 zwei eigenständige Lösungen auf, deren technologischer Zusammenhang in der Integration einer Traggelenkaufnahme in den Traglenker besteht.

Vorteilhafte Ausgestaltungen und Weiterbildungen des erfindungsgemäßen Traglenkers sind Gegenstand der abhängigen Ansprüche.

Der Traglenker weist einen länglichen Lenkerkörper auf. An einem Lenkerende des Lenkerkörpers ist eine Kugelgelenkschale angeordnet. Der Lenkerkörper ist aus Metallblech gebildet und weist einen Hohlkammerabschnitt auf. Die Kugelgelenkschale ist ein Schmiede- oder Gussteil aus Metall, insbesondere aus Stahl oder Aluminium. Die Kugelgelenkschale weist einen Befestigungsfortsatz auf. Der Befestigungsfortsatz ist materialeinheitlich einstückig an der Kugelgelenkschale ausgebildet. Die Kugelgelenkschale greift mit dem Befestigungsfortsatz in den Hohlkammerabschnitt des Lenkerkörpers ein und ist mit dem Lenkerkörper gefügt.

Ein erfindungswesentlicher Aspekt ist, dass die Kugelgelenkschale schmiede- oder gusstechnisch aus Metall hergestellt ist mit einem einstückig materialeinheitlich angeformten bzw. ausgeformten Befestigungsfortsatz. Über den Befestigungsfortsatz erfolgt die Verbindung mit dem Lenkerkörper. Der Lenkerkörper ist in Blechbauweise aus Schalensegmenten bzw. Blechschalen hergestellt. Vorzugsweise kommen hier schweißbare Stähle zum Einsatz. Schalensegmente bilden als Teilstücke den Lenkerkörper. Unter Schalensegmenten sind insbesondere Blechschalen zu verstehen. Diese sind insbesondere durch Zugdruckumformen eines Blechzuschnitts hergestellt. Der Lenkerkörper ist aus zwei Blechschalen zusammengesetzt. Diese sind entlang ihrer Kontaktflächen zumindest bereichsweise miteinander stoffschlüssig gefügt, insbesondere verschweißt. Der Lenkerkörper kann auch aus einem Blechzuschnitt umform- bzw. falttechnisch geformt sein. Der Lenkerkörper ist dann im Querschnitt rechteckförmig konfiguriert und weist zwei sich mit Abstand parallel zueinander erstreckenden Seitenwände auf, die über einen Steg miteinander verbunden sind. Die dem Steg gegenüberliegende Seite kann durch einen ebenfalls falttechnisch einstückig hergestellten Flanschabschnitt geschlossen sein. Möglich ist es auch, die dem Steg gegenüberliegende Seite durch Laschen zu verbinden.

Der Lenkerkörper besteht insbesondere aus einem Stahlwerkstoff und weist folgende mechanische Eigenschaften auf:

| | |
|---|---|
| Streckgrenze Rp0.2: | 480 - 880 MPa |
| Zugfestigkeit Rₘ: | 580 - 1.050 MPa |
| Bruchdehnung min. A₈₀ₘₘ: | >8% |

Die Kugelgelenkschale besteht aus einem Stahlwerkstoff und ist als Schmiede- oder Gussteil ausgeführt und weist folgende mechanische Eigenschaften auf:

| | |
|---|---|
| Streckgrenze Rp0.2: | 400 - 600 MPa |
| Zugfestigkeit Rₘ: | 600 - 820 MPa |
| Bruchdehnung min. A5: | >14% |

Zugversuche für metallische Werkstoffe zur Ermittlung der mechanischen Eigenschaften sind in der ISO 6892 genormt.

Der oder die den Lenkerkörper bildenden Blechzuschnitte sind in Anpassung auf die Endkontur des Lenkerkörpers zugeschnitten und gegebenenfalls vorgeformt, insbesondere mit Einprägungen, Umstellungen, Lageröffnungen oder Sicken und/oder Verrippungen versehen.

Die Schalensegmente bzw. die Blechschalen weisen eine Wandstärke zwischen 2,0 mm und 4,5 mm auf. Der Befestigungsfortsatz besitzt eine Breite, die zwischen 20 mm und 40 mm bemessen ist. Die Kugelgelenkschale weist einen größten Außendurchmesser zwischen 35 mm und 60 mm auf.

Der Lenkerkörper weist in vertikalem Querschnitt eine Höhe und eine Breite auf, wobei die Höhe größer bemessen ist als die Breite. Die Höhe ist insbesondere doppelt so groß oder größer bemessen als die Breite. Das Verhältnis der Höhe zur Breite ist vorzugsweise größer 2:1 und liegt insbesondere im Bereich zwischen 3:1 bis 5:1.

Der Lenkerkörper ist durch Schalensegmente bzw. aus zwei Blechschalen gebildet mit dem vorderen zur Kugelgelenkschale gerichteten Hohlkammerabschnitt. In Längsrichtung kann der Lenkerkörper weitere Hohlkammerabschnitte aufweisen. Der Lenkerkörper ist im vertikalen Querschnitt rechteckig konfiguriert mit einer längeren Seite des Rechtecks, welches bezogen auf die Einbaulage des Fahrwerkslenkers, in Fahrzeughochrichtung angeordnet ist. Auf diese Weise wird den hohen Steifigkeitsanforderungen in Fahrzeughochrichtung Rechnung getragen.

Die Querschnittsgeometrie des Lenkerkörpers kann den Steifigkeitsanforderungen entsprechend eingestellt werden. Es besteht zudem die Möglichkeit, die Steifigkeit lokal zu variieren, insbesondere durch eine Variation der Querschnittsgeometrie.

Die Seitenwände des Hohlkammerabschnitts und seitliche Abschnitte des Befestigungsfortsatzes kontaktieren einander. Der Befestigungsfortsatz kann so ausgebildet sein, dass er die Seitenwände des Hohlkammerabschnitts bzw. die Schalensegmente lokal abstützt. Am Befestigungsfortsatz können hierzu Stützflanken ausgebildet sein, welche mit am Lenkerkörper vorgesehenen Stützabschnitten in Kontakt stehen.

Der Lenkerkörper ist bereichsweise im vertikalen Querschnitt rechteckig konfiguriert. Eine rechteckige Querschnittskonfiguration ist insbesondere im Hohlkammerabschnitt vorgesehen.

Des Weiteren kann der Lenkerkörper bereichsweise im vertikalen Querschnitt Doppel-T-förmig konfiguriert sein. Eine solche Doppel-T-förmige Konfiguration kann insbesondere im mittleren Längenabschnitt des Lenkerkörpers ausgebildet sein. Hierbei kontaktieren benachbarte Längswände der den Lenkerkörper bildenden Schalensegmente einander und bilden einen Vertikalsteg. Oberhalb und unterhalb des Vertikalstegs verlaufen in Längsrichtung Hohlkammerabschnitte.

Der Traglenker weist an seinem ersten Längsende die Kugelgelenkschale auf. An seinen dem ersten Längsende gegenüberliegenden zweiten Längsende ist eine Lageraufnahme vorgesehen. Diese ist durch Lageröffnungen gebildet, die in parallel zueinander verlaufenden Seitenwandabschnitten im Bereich des zweiten Lagerendes vorgesehen sind.

Die Kugelgelenkschale am ersten Längsende bildet eine erste Anbindungsstelle. Die Lageraufnahme am zweiten Längsende ist eine zweite Anbindungsstelle. Des Weiteren weist der Traglenker eine weitere Anbindungsstelle für ein Feder/Dämpfer-Element auf. Diese dritte Anbindungsstelle ist ein zusätzlicher Krafteinleitungspunkt für Feder- und Dämpferkräfte, die senkrecht einwirken und größer sind als die waagerechten Kräfte. Das dort integrierte Gelenk wird daher auch Traggelenk genannt. Die dritte Anbindungsstelle für das Feder/Dämpfer-Element kann im Lenkerkörper ausgebildet sein. Die Lageraufnahme der dritten Anbindungsstelle ist durch Lageröffnungen in den Seitenwänden des Lenkerkörpers bzw. der den Lenkerkörper bildenden Blechschalen ausgebildet. In einer erfindungsgemäßen Variante weist jede Lageröffnung einen umlaufenden Kragen auf, der in das Innere des Lenkerkörpers gerichtet ist. Die Kragen der beiden Lageröffnungen kontaktieren einander und bilden einen Lagerkranz.

Der erfindungsgemäße Traglenker sieht vor, dass die Anbindungsstelle für das Feder/Dämpfer-Element im Hohlkammerabschnitt und im Befestigungsfortsatz ausgebildet ist. Der Hohlkammerabschnitt weist zwei einander beabstandet gegenüberliegende Seitenwände auf, wobei in jeder Seitenwand eine Lageröffnung vorgesehen ist. Der Befestigungsfortsatz weist ebenfalls eine Lageröffnung auf. Die Lageröffnungen in den Seitenwänden und die Lageröffnung im Befestigungsfortsatz sind koaxial zueinander angeordnet, haben also eine gemeinsame Achse.

Der Lenkerkörper kann zumindest eine in dessen Längsrichtung orientierte Sicke aufweisen. Vorzugsweise ist in jedem Schalensegment etwa über dem mittleren Längenabschnitt jeweils eine Sicke ausgebildet. Demzufolge weist der Lenkerkörper entlang seiner Längsseiten jeweils eine Sicke auf. Durch Form, Anordnung und Ausgestaltung der Sicke bzw. der mehreren Sicken kann das Steifigkeitsverhalten und das Kraftaufnahmevermögen des Fahrwerkslenkers beeinflusst werden.

Des Weiteren kann der Lenkerkörper zumindest eine Sollknickstelle aufweisen. Vorzugsweise ist die Sollknickstelle in der Nähe der achsträgerseitigen Anbindung vorgesehen, also im Bereich vor dem zweiten Längsende.

Eine Ausgestaltung einer Sollknickstelle kann durch eine als in z-Richtung (Hochrichtung) verlaufende Sicke ausgeführt sein, die sich über die komplette Höhe des Lenkerkörpers erstreckt. Die Sollknickstelle ist dafür vorgesehen, dass der Fahrwerkslenker bzw. dessen Lenkerkörper bei Überschreiten eines vorbestimmten Kraftniveaus auf das Rad in Fahrzeugquerrichtung gezielt knickt. Auch bei einem sogenannten Small Overlap Crash mit Krafteinwirkung auf das Rad in Fahrzeuglängsrichtung soll der Traglenker gezielt kollabieren.

Bei einer in z-Richtung verlaufenden Sicke, die sich über die komplette Höhe des Lenkerkörpers erstreckt, weist der Lenkerkörper in diesem Bereich einen gekrümmten Konturverlauf auf. Eine Sollknickstelle kann alternativ und/oder zusätzlich auch durch eine lokale Taillierung des Lenkerkörpers oder durch Ausnehmungen im Lenkerkörper, ebenso wie durch eine bereichsweise Verringerung der Wandstärke des Lenkerkörpers, ausgeführt sein. Eine Wanddickenreduktion kann beispielsweise durch eine Verringerung der Blechdicke in zumindest einem Schalensegment ausgebildet sein.

Die Kugelgelenkschale mit ihrem materialeinheitlich einstückigen Befestigungsfortsatz und der Lenkerkörper sind miteinander gefügt. Dies kann stoffschlüssig, insbesondere schweißtechnisch erfolgen. Alternativ und/oder zusätzlich können die Kugelgelenkschale und der Lenkerkörper auch formschlüssig miteinander gefügt sein. Eine formschlüssige Fügung ist insbesondere durch eine Nietverbindung, also niettechnisch, ausgeführt.

Erfindungsgemäß handelt es sich um einen Traglenker. Dieser weist radseitig eine Kugelgelenkschale auf. Karosserieseitig an dem dem ersten Längsende gegenüberliegenden zweiten Längsende besitzt der Traglenker eine Lageraufnahme, insbesondere eine Lageraufnahme für ein Gummilager. Der Traglenker weist des Weiteren einen zusätzlichen Krafteinleitungspunkt für Feder- und Dämpferkräfte auf. Diese dritte Anbindungsstelle für ein Feder/Dämpfer-Element ist vorteilhaft in den Traglenker integriert. Der Traglenker überträgt belastungsgerecht Feder-, Dämpfungs- und Stabilisierungskräfte und erfüllt höchste Festigkeits- und Steifigkeitsanforderungen. Synergistische Effekte werden durch die Kombination der Kugelgelenkschale in der Ausführung als Schmiede- oder Gussteil aus Metall und dem in Blechbauweise ausgeführten Lenkerkörper erzielt. Durch den Lenkerkörper aus Metallblech, insbesondere in Schalenbauweise aus Schalensegmenten, kann eine signifikante Gewichtsersparnis erzielt werden. Die Herstellung des erfindungsgemäßen Traglenkers ist rationell und vorteilhaft.

Die Erfindung ist nachfolgend anhand von in den Zeichnungen dargestellten Ausführungsbeispielen näher beschrieben. Es zeigen:
- Figur 1: eine erste Ausführungsform eines erfindungsgemäßen Traglenkers in einer perspektivischen Darstellungsweise;
- Figur 2: den Traglenker in einer anderen Perspektive;
- Figur 3: die Bauteile des Traglenkers in explosionsartig auseinandergezogener Darstellung;
- Figur 4: den Traglenker in einer Draufsicht und bezogen auf die Einbaulage in einem Fahrzeug ohne hinteres Schalensegment;
- Figur 5: die Draufsicht auf den Traglenker mit dem hinteren Schalensegment;
- Figur 6: einen vertikalen Querschnitt durch den Traglenker der Figur 5 entlang der Linie A-A;
- Figur 7: einen vertikalen Querschnitt durch den Traglenker der Figur 5 entlang der Linie B-B;
- Figur 8: in explosionsartig auseinandergezogener Darstellungsweise die Bauteile eines ersten nicht erfindungsgemäßen Beispiels eines Traglenkers;
- Figur 9: eine Seitenansicht auf den Traglenker und bezogen auf die Einbaulage in einem Fahrzeug ohne hinteres Schalensegment;
- Figur 10: die Darstellung entsprechend der Figur 9 in einer Draufsicht;
- Figur 11: eine zweite Ausführungsform eines erfindungsgemäßen Traglenkers mit einer explosionsartig auseinandergezogenen Darstellung seiner Bauteile;
- Figur 12: eine Seitenansicht auf den Traglenker der Figur 11 und bezogen auf die Einbaulage in einem Fahrzeug ohne das hintere Schalensegment;
- Figur 13: die Darstellung des Traglenkers entsprechend der Figur 12 in einer Draufsicht;
- Figur 14: eine dritte Ausführungsform eines Traglenkers in einer Seitenansicht und bezogen auf die Einbaulage in einem Fahrzeug ohne die Darstellung des hinteren Schalensegments und
- Figur 15: die Darstellung des Traglenkers entsprechend der Figur 14 in einer Draufsicht.

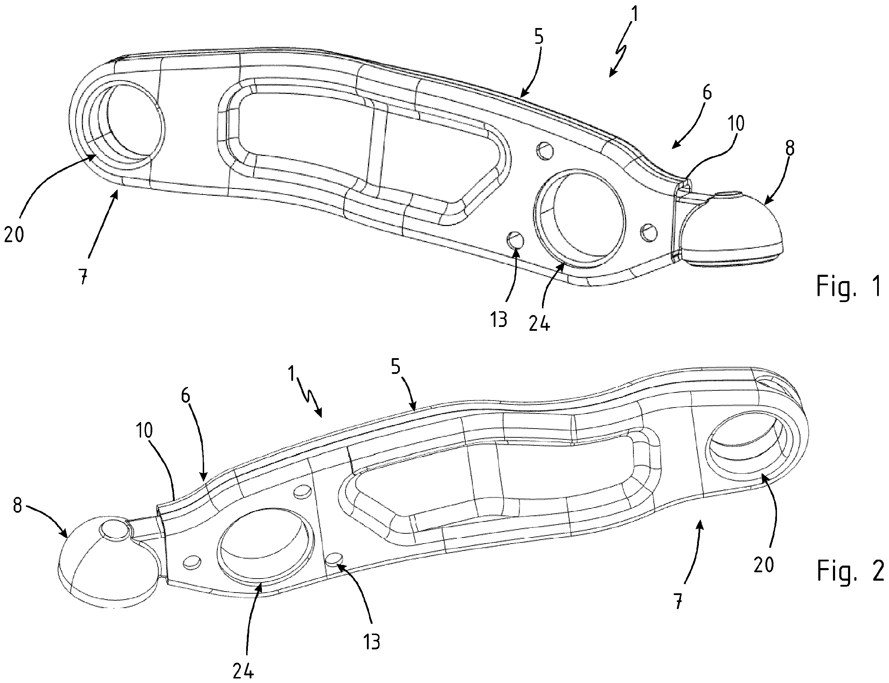

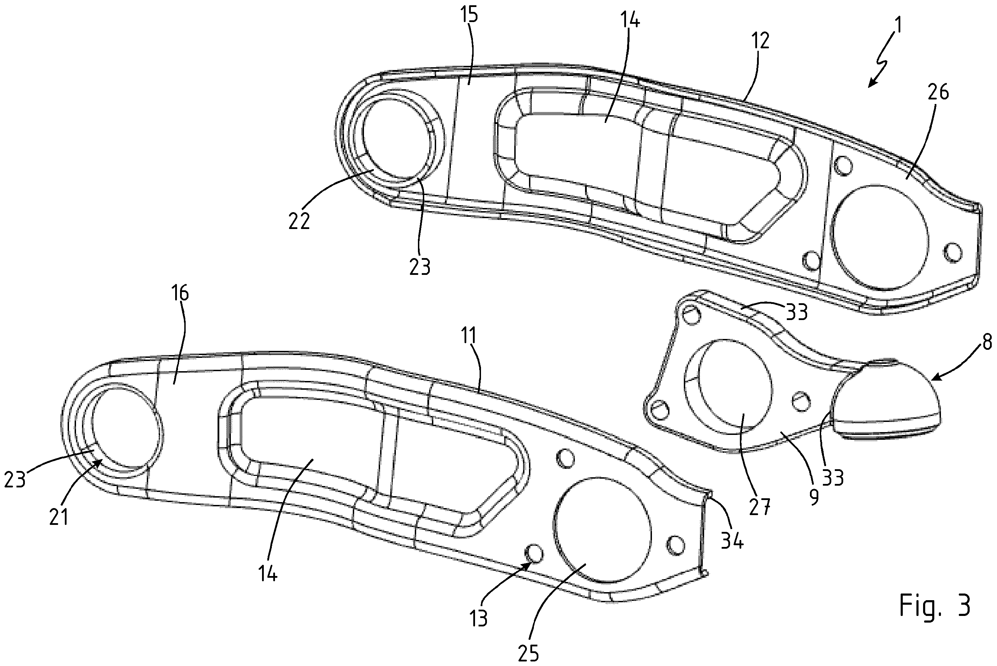

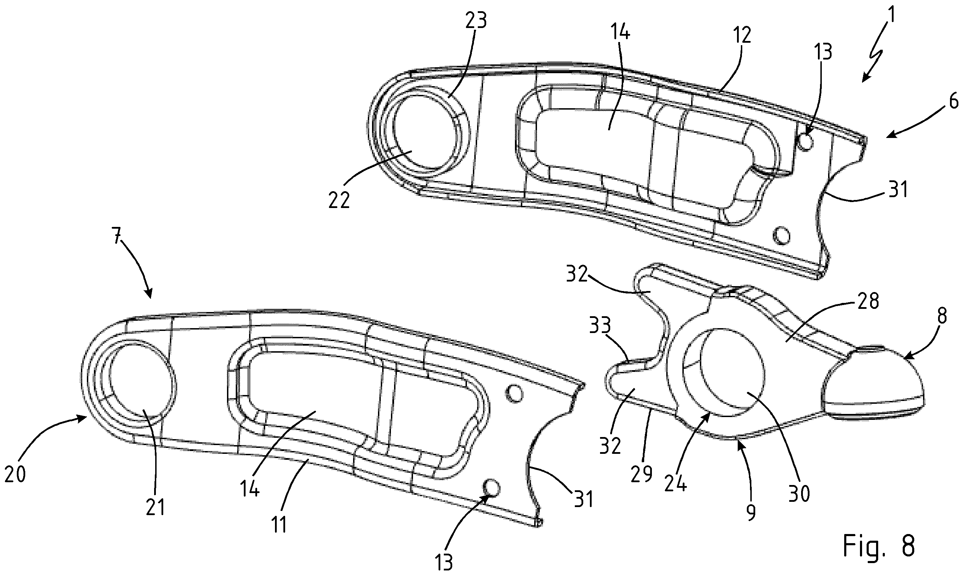

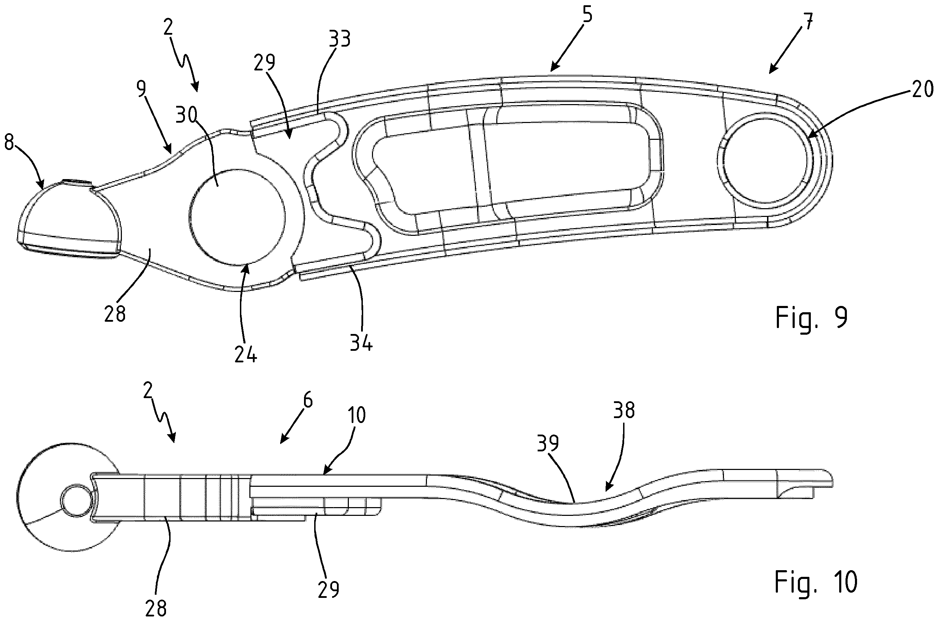

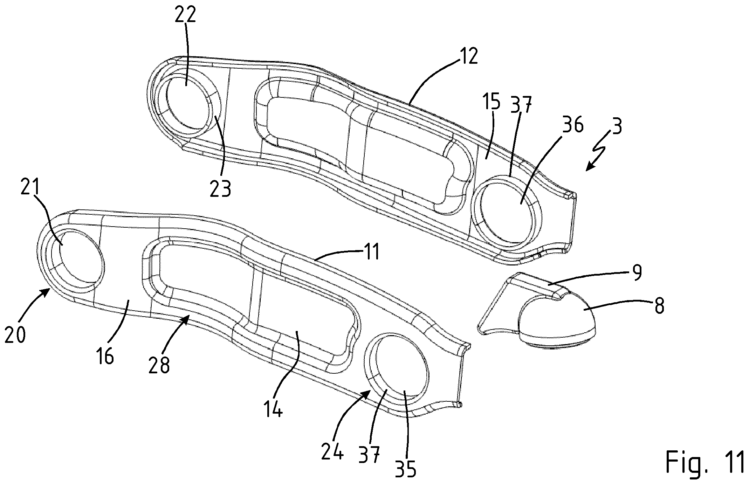

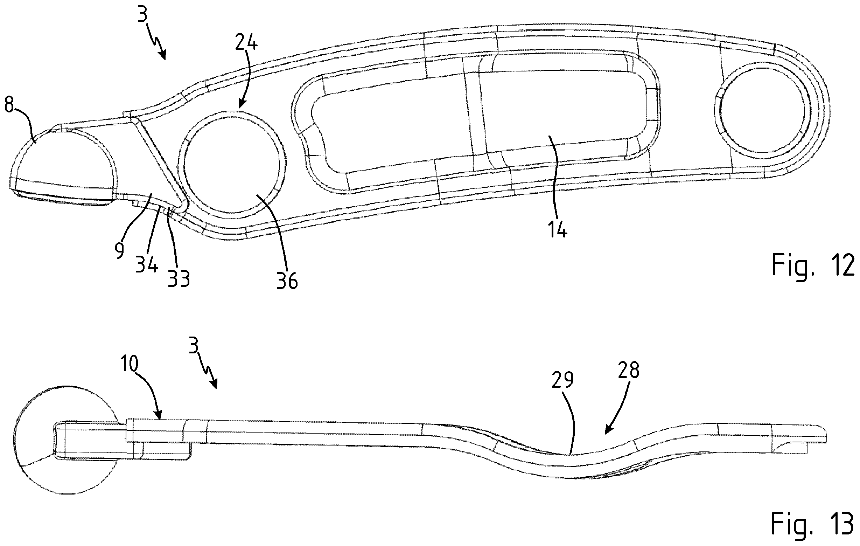

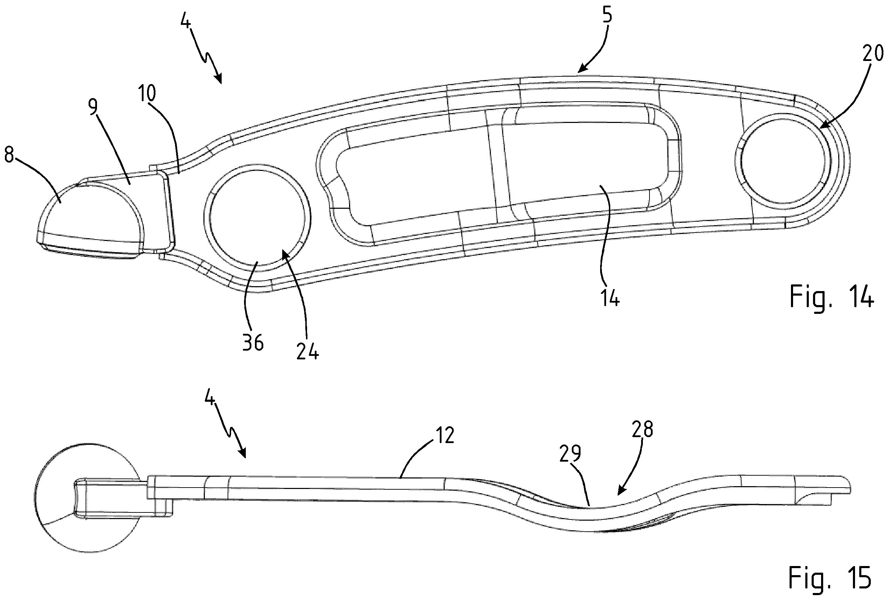

Anhand der Figuren 1 - 7 ist eine erste Ausführungsform eines erfindungsgemäßen Traglenkers 1 erläutert. Die Figuren 8 bis 10 zeigen ein erstes nicht erfindungsgemäßes Beispiel eines Traglenkers 2. Die Figuren 11 bis 13 verdeutlichen eine zweite Ausführungsform eines Traglenkers 3. Die Figuren 14 und 15 illustrieren eine dritte Ausführungsform eines Traglenkers 4.

Jeder Traglenker 1 - 4 weist einen länglichen Lenkerkörper 5 auf mit einem ersten Längsende 6 und einem zweiten Längsende 7. Am ersten Längsende 6 ist eine Kugelgelenkschale 8 angeordnet.

Die Kugelgelenkschale 8 ist ein Schmiede- oder Gussteil aus Metall, insbesondere aus Stahl oder Aluminium bzw. einer Aluminiumlegierung. An die Kugelgelenkschale 8 ist materialeinheitlich einstückig ein Befestigungsfortsatz 9 angeformt.

Der Lenkerkörper 5 ist aus Metallblech gebildet und weist am ersten Längsende 6 einen Hohlkammerabschnitt 10 auf. Der Lenkerkörper 5 ist aus zwei Schalensegmenten in Form von Blechschalen 11, 12 zusammengesetzt. Die Blechschalen 11, 12 kontaktieren einander an Fügeflächen und sind dort stoffschlüssig gefügt, insbesondere verschweißt. Die Blechschalen 11, 12 sind an ihren Fügeflächen stumpf aneinandergesetzt, so dass sich entlang der Fügeflächen eine stufenlose Außenfläche ergibt. Die zusammengesetzten Blechschalen 11, 12 bilden an ihrem der Kugelgelenkschale 8 zugewandten ersten Längsende den Hohlkammerabschnitt 10. Die Kugelgelenkschale 8 greift mit dem Befestigungsfortsatz 9 in den Hohlkammerabschnitt 10 und ist mit dem Lenkerkörper 5 gefügt.

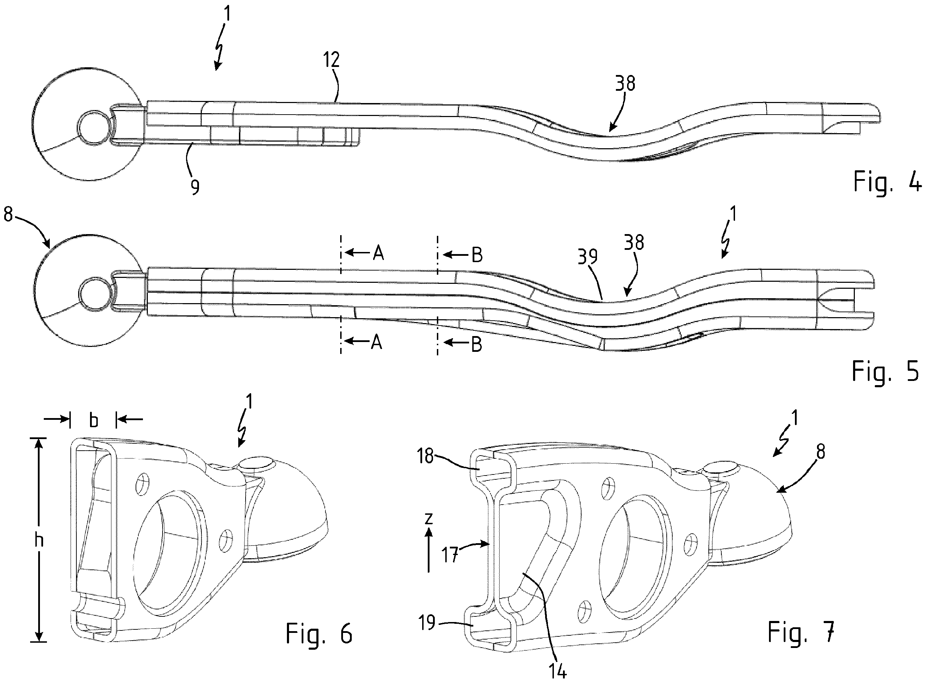

In den Figuren 4, 9, 10, 12, 13, 14 und 15 ist die in Einbaulage des jeweiligen Traglenkers 1 - 4 hintere Blechschale 11 ausgeblendet.

Bei dem Traglenker 1 sind die Kugelgelenkschale 8 und der Lenkerkörper 5 formschlüssig durch eine Nietverbindung 13 gefügt. Hierzu sind Nieten im Bereich des Hohlkammerabschnitts 10 durch den Lenkerkörper 5 und dem Befestigungsfortsatz 9 der Kugelgelenkschale 8 gesetzt. In den Blechschalen 11, 12 und dem Befestigungsfortsatz 9 sind hierzu aufeinander abgestimmte Durchführöffnungen für Nieten vorgesehen.

Auch bei dem Traglenker 2 erfolgt die Verbindung zwischen Kugelgelenkschale 8 und dem Traglenker 2 niettechnisch. Die für die eine Nietverbindung 13 vorgesehenen Öffnungen sind in der Figur 8 zu erkennen.

Bei den Traglenkern 3 und 4 ist eine stoffschlüssige Fügung zwischen Kugelgelenkschale 8 und Lenkerkörper 5 vorgesehen. Hierzu sind der Lenkerkörper 5 und die Kugelgelenkschale 8 miteinander verschweißt. Insbesondere erfolgt die stoffschlüssige Verbindung an Fügeflächen zwischen dem Hohlkammerabschnitt 10 und dem Befestigungsfortsatz 9.

Jeder Lenkerkörper 5 der Traglenker 1 - 4 weist im vertikalen Querschnitt eine Höhe h und eine Breite b auf. Die Höhe h ist größer bemessen als die Breite b, siehe hierzu insbesondere die Darstellung der Figuren 6 und 7.

Der Lenkerkörper 5 ist, was die äußere Querschnittskontur anbelangt, im Wesentlichen rechteckig konfiguriert mit einer längeren Seite des Rechtecks, welche der Höhe h entspricht. Diese ist bezogen auf die Einbaulage eines Traglenkers 1 - 4 in Fahrzeughochrichtung angeordnet. Der Lenkerkörper 5 weist ein entsprechend hohes Widerstandsmoment auf.

Der Lenkerkörper 5 ist insbesondere im Hohlkammerabschnitt 10 rechteckig konfiguriert (Figur 6). Im mittleren Längenabschnitt ist der Lenkerkörper 5 bereichsweise im vertikalen Querschnitt Doppel-T-förmig (Figur 7) konfiguriert.

Jede Blechschale 11, 12 weist eine sich in Längsrichtung des Lenkerkörpers 5 erstreckende Sicke 14 auf. Die im Bereich der Sicke 14 parallel zueinander verlaufenden Seitenwände 15, 16 der Blechschalen 11, 12 kontaktieren einander und bilden einen Vertikalsteg 17. Oberhalb und unterhalb des Vertikalstegs 17 bilden die Seitenwände 15, 16 bzw. die Blechschalen 11, 12 Hohlkammerabschnitte 18, 19 aus, die sich in Längsrichtung des Lenkerkörpers 5 vom ersten Längsende 6 bis zum zweiten Längsende 7 erstrecken.

Am zweiten Längsende 7 des Lenkerkörpers 5 ist eine Lageraufnahme 20 vorgesehen. Die Lageraufnahme 20 ist durch Lageröffnungen 21, 22 in den mit Abstand parallel zueinander verlaufenden Seitenwänden 15, 16 im zweiten Längsende 7 gebildet. Jede Lageröffnung 21, 22 weist einen nach innen in Richtung zum Innenraum des Lenkerkörpers 5 gerichteten umlaufenden Kranz 23 auf. Die Lageraufnahme 20 bildet einen zweiten Anbindungspunkt für ein karosserieseitiges Gelenk. Üblicherweise wird in die Lageraufnahme 20 ein Gummilager eingebaut.

Die Traglenker 1 - 4 weisen eine weitere dritte Anbindungsstelle in Form einer Traggelenkaufnahme 24 auf. Dort wird ein Feder/Dämpfer-Element angeschlossen. Ein in die Traggelenkaufnahme 24 eingebautes Traggelenk bildet einen Krafteinleitungspunkt für Feder- und Dämpferkräfte, die senkrecht einwirken und größer sind als die waagerechten Kräfte.

Bei dem Traglenker 1 ist die Traggelenkaufnahme 24 durch Lageröffnungen 25, 26, 27 gebildet, die koaxial zueinander angeordnet sind. Der Hohlkammerabschnitt 10 weist in beiden einander beabstandet gegenüberliegenden Seitenwänden 15, 16 jeweils eine Lageröffnung 25, 26 auf. Des Weiteren ist im Befestigungsfortsatz 9 eine Lageröffnung 27 ausgebildet. Die Lageröffnungen 25, 26 in den Seitenwänden 15, 16 und die Lageröffnung 27 im Befestigungsfortsatz 9 sind deckungsgleich bzw. koaxial zueinander angeordnet und bilden die Traggelenkaufnahme 24. Diese Ausgestaltung ist besonders vorteilhaft, wenn der Abstand zwischen dem Kugelgelenk bzw. der Kugelgelenkschale 8 und einem Feder/Dämpfer-Element klein ist, da dann besonders hohe Kräfte wirken und eine hohe Steifigkeit notwendig ist. Die hohe Belastbarkeit wird insbesondere dadurch realisiert, dass die Lageröffnung 27 im Befestigungsfortsatz 9 im Vollmaterial gestaltet ist.

Die Traggelenkaufnahme 24 beim Traglenker 2 ist im Befestigungsfortsatz 9 ausgebildet. Hierzu weist der Befestigungsfortsatz 9 ausgehend von der Kugelgelenkschale 8 einen vorderen Traggelenkabschnitt 28 auf, an welchem sich ein Endabschnitt 29 anschließt. Der vordere Traggelenkabschnitt 28 ist dicker ausgeführt als der Endabschnitt 29. Im Traggelenkabschnitt 28 ist eine die Breite des Befestigungsfortsatzes 9 durchsetzende Lageröffnung 30 ausgebildet. Rückseitige Bereiche des Traggelenkabschnitts 28 sind gerundet ausgeführt. Die freien Enden der Blechschalen 11, 12 weisen eine an die Kontur des rückseitigen Bereichs des Traggelenkabschnitts 28 angepasste Ausnehmung 31 auf. Die Blechschalen 11, 12 sind an den Traggelenkabschnitt 28 angesetzt und mit diesem gefügt. Zinkenförmige Vorsprünge 32 des Endabschnitts 29 ragen nach hinten in den Hohlkammerabschnitt 10 des Lenkerkörpers 5. Am Befestigungsfortsatz 9 sind Stützflanken 33 ausgebildet, welche mit Stützabschnitten 34 im Lenkerkörper 5 in Kontakt stehen und die Blechschalen 11, 12 abstützen.

Bei den Traglenkern 3 und 4 ist die Traggelenkaufnahme 24 durch miteinander kommunizierende Lageröffnungen 35, 36 in den Seitenwänden 15, 16 der Blechschalen 11, 12 des Lenkerkörpers 5 ausgebildet. Der Befestigungsfortsatz 9 ist kürzer und endet vor der Traggelenkaufnahme 24. Die Lageröffnungen 35, 36 weisen jeweils einen umlaufenden nach innen gerichteten Kranz 37 auf, welche den Lagersitz in der Traggelenkaufnahme 24 bilden.

Die Seitenwände 15, 16 im Hohlkammerabschnitt 10 und der Befestigungsfortsatz 9 kontaktieren einander und stützen sich gegeneinander ab. Auch bei den Traglenkern 1, 3 und 4 sind am Befestigungsfortsatz 9 Stützflanken 33 ausgebildet, welche mit am Lenkerkörper 5 vorgesehenen Stützabschnitten 34 in Kontakt stehen.

Die Lenkerkörper 5 der Traglenker 1 - 4 weisen in der Nähe der achsträgerseitigen Anbindung, also im Bereich des zweiten Längsendes 7 eine Sollknickstelle 38 auf. Diese ist durch eine in z-Richtung verlaufende Sicke 39 ausgebildet, die sich über die komplette Höhe h des Lenkerkörpers 5 erstreckt. Die Sollknickstelle 38 bewirkt, dass der Lenkerkörper 5 bei Überschreiten eines bestimmten Kraftniveaus auf das Rad in Fahrzeugquerrichtung gezielt knickt. Auch bei einem Aufprall mit geringerer Überdeckung und Krafteinwirkung auf das Rad in Fahrzeuglängsrichtung wird über die Sollknickstelle 38 ein Kollabieren des Lenkerkörpers 5 initiiert. Durch die in z-Richtung, also in Hochrichtung des Lenkerkörpers 5 verlaufende Sicke 39 verläuft der Lenkerkörper 5 im Bereich der Sollknickstelle gekrümmt bzw. hat in seiner Längserstreckung einen gekrümmten Längsverlauf.

Die Lenkerkörper 5 der Traglenker 1 - 4 weisen eine Streckgrenze Rₚ0.2 zwischen jeweils einschließlich 480 - 880 MPa, eine Zugfestigkeit Rₘ zwischen jeweils einschließlich 580 - 1.050 MPa und eine Bruchdehnung min. A₈₀ₘₘ von >8% auf. Die Kugelgelenkschalen 8 der Traglenker 1 - 4 weisen eine Streckgrenze Rₚ0.2 zwischen jeweils einschließlich 400 - 600 MPa, eine Zugfestigkeit Rₘ zwischen jeweils einschließlich 600 - 820 MPa und eine Bruchdehnung min. A5 von größer >14% auf.

Die Traglenker 1 - 4 mit einem Lenkerkörper 5 und eine Kugelgelenkschale 8 in der Werkstoffkombination und den mechanischen Eigenschaften, wie vorstehend ausgeführt, sowie der geometrischen Auslegung ergänzen sich in synergistischer Weise und gewährleisten, dass der Traglenker 1 - 4 hohe und höchste Steifigkeitsanforderungen erfüllt und auch höchsten dynamischen Belastungen standhält. Die geometrische Ausgestaltung bezieht sich auf die Einbaulage der Traglenker 1 - 4 in einem Kraftfahrzeug. Der Lenkerkörper 5 weist im vertikalen Querschnitt eine Höhe h und eine Breite b auf. Wesentlich ist, dass die Höhe h größer bemessen ist als die Breite b.

### Bezugszeichen:

- 1 -: Traglenker
- 2 -: Traglenker
- 3 -: Traglenker
- 4 -: Traglenker
- 5 -: Lenkerkörper
- 6 -: erstes Längsende von 5
- 7 -: zweites Längsende von 5
- 8 -: Kugelgelenkschale
- 9 -: Befestigungsfortsatz
- 10 -: Hohlkammerabschnitt
- 11 -: Blechschale
- 12 -: Blechschale
- 13 -: Nietverbindung
- 14 -: Sicke
- 15 -: Seitenwand
- 16 -: Seitenwand
- 17 -: Vertikalsteg
- 18 -: Hohlkammerabschnitt
- 19 -: Hohlkammerabschnitt
- 20 -: Lageraufnahme
- 21 -: Lageröffnung
- 22 -: Lageröffnung
- 23 -: Kranz
- 24 -: Traggelenkaufnahme
- 25 -: Lageröffnung von 15
- 26 -: Lageröffnung von 16
- 27 -: Lageröffnung von 9
- 28 -: Traggelenkabschnitt
- 29 -: Endabschnitt
- 30 -: Lageröffnung
- 31 -: Ausnehmung
- 32 -: Vorsprünge
- 33 -: Stützflanke
- 34 -: Stützabschnitt
- 35 -: Lageröffnung
- 36 -: Lageröffnung
- 37 -: Kranz
- 38 -: Sollknickstelle
- 39 -: Sicke

- h -: Höhe
- b -: Breite

## Patentansprüche

1. Traglenker, welcher einen länglichen Lenkerkörper (5) aufweist, wobei an einem ersten Längsende (6) des Lenkerkörpers (5) eine Kugelgelenkschale (8) angeordnet ist, welche eine erste Anbindungsstelle bildet, wobei der Lenkerkörper (5) aus Metallblech gebildet ist, wobei der Lenkerkörper (5) aus Schalensegmenten, insbesondere aus zwei Blechschalen (11, 12), zusammengesetzt ist und wobei der Lenkerkörper (5) im vertikalen Querschnitt eine Höhe (h) und eine Breite (b) aufweist, wobei die Höhe (h) größer bemessen ist als die Breite (b) des Lenkerkörpers (5) und der Lenkerkörper (5) einen Hohlkammerabschnitt (10) aufweist und die Kugelgelenkschale (8) ein Schmiede- oder Gussteil aus Metall ist und einen Befestigungsfortsatz (9) aufweist, wobei die Kugelgelenkschale (8) mit dem Befestigungsfortsatz (9) in den Hohlkammerabschnitt (10) des Lenkerkörpers (5) eingreift und mit dem Lenkerkörper (5) gefügt ist, **dadurch gekennzeichnet, dass** an dem ersten Längsende (6) gegenüberliegenden zweiten Längsende (7) eine Lageraufnahme (20) vorgesehen ist, welche eine zweite Anbindungsstelle bildet, wobei die Lageraufnahme (20) durch Lageröffnungen (21, 22) in mit Abstand parallel zueinander verlaufenden Seitenwänden (15, 16) im zweiten Längsende (7) gebildet ist, wobei jede Lageröffnung (21,22) einen nach innen in Richtung zum Innenraum des Lenkerkörpers (5) gerichteten umlaufenden Kranz aufweist und der Traglenker (1) eine dritte Anbindungsstelle in Form einer Traglenkaufnahme (24) aufweist, welche dazu eingerichtet und bestimmt ist, ein Feder- und Dämpfer-Element anzuschließen, wobei die Traggelenkaufnahme (24) gebildet ist durch Lageröffnungen (25, 26) in den zwei einander beabstandet gegenüberliegenden Seitenwänden (15, 16) des Hohlkammerabschnitts (10) und durch eine Lageröffnung (27) im Befestigungsfortsatz (9), wobei die Lageröffnungen (25, 26) in den Seitenwänden (15, 16) und die Lageröffnung (27) im Befestigungsfortsatz (9) koaxial zueinander angeordnet sind.

2. Traglenker, welcher einen länglichen Lenkerkörper (5) aufweist, wobei an einem ersten Längsende (6) des Lenkerkörpers (5) eine Kugelgelenkschale (8) angeordnet ist, welche eine erste Anbindungsstelle bildet, wobei der Lenkerkörper (5) aus Metallblech gebildet ist, wobei der Lenkerkörper (5) aus Schalensegmenten in Form zwei Blechschalen (11, 12), zusammengesetzt ist und wobei der Lenkerkörper (5) im vertikalen Querschnitt eine Höhe (h) und eine Breite (b) aufweist, wobei die Höhe (h) größer bemessen ist als die Breite (b) des Lenkerkörpers (5) und der Lenkerkörper (5) einen Hohlkammerabschnitt (10) aufweist und die Kugelgelenkschale (8) ein Schmiede- oder Gussteil aus Metall ist und einen Befestigungsfortsatz (9) aufweist, wobei die Kugelgelenkschale (8) mit dem Befestigungsfortsatz (9) in den Hohlkammerabschnitt (10) des Lenkerkörpers (5) eingreift und mit dem Lenkerkörper (5) gefügt ist, **dadurch gekennzeichnet, dass** an dem ersten Längsende (6) gegenüberliegenden zweiten Längsende (7) eine Lageraufnahme (20) vorgesehen ist, welche eine zweite Anbindungsstelle bildet, wobei die Lageraufnahme (20) durch Lageröffnungen (21, 22) in mit Abstand parallel zueinander verlaufenden Seitenwänden (15, 16) im zweiten Längsende (7) gebildet ist, wobei jede Lageröffnung (21,22) einen nach innen in Richtung zum Innenraum des Lenkerkörpers (5) gerichteten umlaufenden Kranz aufweist und der Traglenker (1) eine dritte Anbindungsstelle in Form einer Traggelenkaufnahme (24) aufweist, welche dazu eingerichtet und bestimmt ist, ein Feder- und Dämpfer-Element anzuschließen, wobei die Traggelenkaufnahme (24) durch miteinander kommunizierende Lageröffnungen (35, 36) in den Seitenwänden (15, 16) der Blechschalen (11, 12) des Lenkerkörpers (5) ausgebildet ist, wobei die Lageröffnungen (35, 36) jeweils einen umlaufenden nach innen gerichteten Kranz (37) aufweisen, welche den Lagersitz in der Traggelenkaufnahme (24) bilden und der Befestigungsfortsatz (9) vor der Traggelenkaufnahme (24) endet.

3. Traglenker nach Anspruch 1 oder 2, **dadurch gekennzeichnet, dass** Seitenwände (15, 16) des Hohlkammerabschnitts (10) und der Befestigungsfortsatz (9) einander kontaktieren.

4. Traglenker nach einem der Ansprüche 1 bis 3, **dadurch gekennzeichnet, dass** am Befestigungsfortsatz (9) Stützflanken (33) ausgebildet sind, welche mit am Lenkerkörper (5) vorgesehenen Stützabschnitten (34) in Kontakt stehen.

5. Traglenker nach einem der Ansprüche 1 bis 4, **dadurch gekennzeichnet, dass** der Lenkerkörper (5) bereichsweise im vertikalen Querschnitt rechteckförmig konfiguriert ist.

6. Traglenker nach einem der Ansprüche 1 bis 5, **dadurch gekennzeichnet, dass** der Lenkerkörper (5) bereichsweise im vertikalen Querschnitt Doppel-T-förmig konfiguriert ist.

7. Traglenker nach einem der Ansprüche 1 bis 6, **dadurch gekennzeichnet, dass** dass der Lenkerkörper (5) zumindest eine in dessen Längsrichtung orientierte Sicke (14) aufweist.

8. Traglenker nach einem der Ansprüche 1 bis 7, **dadurch gekennzeichnet, dass** der Lenkerkörper (5) zumindest eine Sollknickstelle (38) aufweist.

9. Traglenker nach einem der Ansprüche 1 bis 8, **dadurch gekennzeichnet, dass** die Kugelgelenkschale (8) und der Lenkerkörper (5) stoffschlüssig, insbesondere schweißtechnisch, gefügt sind.

10. Traglenker nach einem der Ansprüche 1 bis 9, **dadurch gekennzeichnet, dass** die Kugelgelenkschale (8) und der Lenkerkörper (5) formschlüssig, insbesondere niettechnisch, gefügt sind.

11. Traglenker nach einem der Ansprüche 1 bis 10, **dadurch gekennzeichnet, dass** der Lenkerkörper (5) eine Streckgrenze Rp0.2 zwischen jeweils einschließlich 480 - 880 MPa, eine Zugfestigkeit Rm zwischen jeweils einschließlich 580 - 1.050 MPa und eine Bruchdehnung min. A80mm von >8% aufweist sowie die Kugelgelenkschale eine Streckgrenze Rp0.2 zwischen jeweils einschließlich 400 - 600 MPa, eine Zugfestigkeit Rm zwischen jeweils einschließlich 600 - 820 MPa und eine Bruchdehnung min. A5 von größer >14% aufweist.

## Claims

1. Support link arm, which has an elongated link arm body (5), wherein a ball joint shell (8) is disposed at a first longitudinal end (6) of the link arm body (5), which forms a first connection point, wherein the link arm body (5) is made of sheet metal, wherein the link arm body (5) is composed of shell segments, in particular of two sheet metal shells (11, 12), and
wherein the link arm body (5) has a height (h) and a width (b) in vertical cross-section, wherein the height (h) is greater than the width (b) of the link arm body (5) and the link arm body (5) has a hollow chamber section (10) and the ball joint shell (8) is a forged or cast part, made of metal, and has a fastening extension (9),
wherein the ball joint shell (8) engages with the fastening extension (9) in the hollow chamber section (10) of the link arm body (5) and is joined to the link arm body (5), **characterised in that** a bearing mount (20) is provided at the second longitudinal end (7) opposite the first longitudinal end (6), which forms a second connection point,
wherein the bearing mount (20) is formed by bearing openings (21, 22) in side walls (15, 16), that are spaced apart parallel to one another, in the second longitudinal end (7),
wherein each bearing opening (21, 22) has a circumferential ring directed inwards towards the interior of the control link arm body (5) and the support link arm (1) has a third connection point in the form of a bearing joint mount (24), which is configured and intended to connect a spring and damper element,
wherein the bearing joint mount (24) is formed by bearing openings (25, 26) in the two spaced-apart opposite side walls (15, 16) of the hollow chamber section (10) and by a bearing opening (27) in the fastening extension (9), wherein the bearing openings (25, 26) in the side walls (15, 16) and the bearing opening (27) in the fastening extension (9) are disposed coaxially to one another.

2. Support link arm, which has an elongated link arm body (5), wherein a ball joint shell (8) is arranged at a first longitudinal end (6) of the link arm body (5), which forms a first connection point, wherein the link arm body (5) is made of sheet metal, wherein the link arm body (5) is composed of shell segments in the form of two sheet metal shells (11, 12), and
wherein the link arm body (5) has a height (h) and a width (b) in vertical cross-section, wherein the height (h) is greater than the width (b) of the link arm body (5) and the link arm body (5) has a hollow chamber section (10) and the ball joint shell (8) is a forged or cast part, made of metal, and has a fastening extension (9),
wherein the ball joint shell (8) engages with the fastening extension (9) in the hollow chamber section (10) of the link arm body (5) and is joined to the link arm body (5), **characterised in that** a bearing mount (20) is provided at the second longitudinal end (7) opposite the first longitudinal end (6), which forms a second connection point,
wherein the bearing mount (20) is formed by bearing openings (21, 22) in side walls (15, 16), that are spaced apart parallel to one another, in the second longitudinal end (7),
wherein each bearing opening (21, 22) has a circumferential ring directed inwards towards the interior of the control link arm body (5) and the support link arm (1) has a third connection point in the form of a bearing joint mount (24), which is configured and intended to connect a spring and damper element,
wherein the bearing joint mount (24) is configured by mutually communicating bearing openings (35, 36) in the side walls (15, 16) of the sheet metal shells (11, 12) of the control link arm body (5), wherein the bearing openings (35, 36) each have a circumferential inwardly directed ring (37) which form the bearing seat in the bearing joint mount (24) and the fastening extension (9) ends in front of the bearing joint mount (24).

3. Support link arm according to claim 1 or 2, **characterised in that** side walls (15, 16) of the hollow chamber section (10) and the fastening extension (9) contact one another.

4. Support link arm according to any one of claims 1 to 3, **characterised in that** support flanks (33) are formed on the fastening extension (9), which are in contact with support sections (34) provided on the link arm body (5).

5. Support link arm according to any one of claims 1 to 4, **characterised in that** the link arm body (5) is configured to be rectangular in part in vertical cross-section.

6. Support link arm according to any one of claims 1 to 5, **characterised in that** the link arm body (5) is configured in part as a double-T shape in vertical cross section.

7. Support link arm according to any one of claims 1 to 6, **characterised in that** the link arm body (5) has at least one bead (14) oriented in its longitudinal direction.

8. Support link arm according to any one of claims 1 to 7, **characterised in that** the link arm body (5) has at least one predetermined bending point (38).

9. Support link arm according to any one of claims 1 to 8, **characterised in that** the ball joint shell (8) and the link arm body (5) are joined by material bonding, in particular by welding.

10. Support link arm according to any one of claims 1 to 9, **characterised in that** the ball joint shell (8) and the link arm body (5) are joined in a form-fitting manner, in particular by riveting.

11. Support link arm according to any one of claims 1 to 10, **characterised in that** the link arm body (5) has a yield strength Rp0.2 of between 480 - 880 MPa inclusive, a tensile strength Rm of between 580 - 1,050 MPa inclusive and an elongation at break min. A80mm of > 8%,
and the ball joint shell has a yield strength Rp0.2 of between 400 - 600 MPa inclusive, a tensile strength Rm of between 600 - 820 MPa inclusive and an elongation at break min. A5 of greater than > 14%.

## Revendications

1. Bras de suspension, qui présente un corps allongé (5) de bras, une coque (8) d'articulation à rotule étant agencée sur une première extrémité longitudinale (6) du corps (5) de bras, laquelle forme un premier point de liaison, le corps (5) de bras étant formé de tôle métallique, le corps (5) de bras étant composé de segments de coque, notamment de deux coques (11, 12) en tôle, et le corps (5) de bras présentant en coupe transversale verticale une hauteur (h) et une largeur (b), la hauteur (h) étant dimensionnée de manière supérieure à la largeur (b) du corps (5) de bras et le corps (5) de bras présentant une partie (10) de chambre creuse, et la coque (8) d'articulation à rotule étant une pièce forgée ou moulée en métal et présentant un prolongement (9) de fixation, la coque (8) d'articulation à rotule étant en engagement avec le prolongement (9) de fixation dans la partie (10) de chambre creuse du corps (5) de bras et étant assemblée avec le corps (5) de bras, **caractérisé en ce qu'**un logement (20) de palier, qui forme un deuxième point de liaison, est prévu sur la deuxième extrémité longitudinale (7) opposée à la première extrémité longitudinale (6), le logement (20) de palier étant formé par des ouvertures (21, 22) de palier dans des parois latérales (15, 16) s'étendant à distance parallèlement l'une à l'autre dans la deuxième extrémité longitudinale (7), chaque ouverture (21, 22) de palier présentant une couronne périphérique dirigée vers l'intérieur en direction de l'espace intérieur du corps (5) de bras et le bras de suspension (1) présentant un troisième point de liaison sous forme d'un logement (24) d'articulation de suspension, lequel est conçu pour, et est destiné à, raccorder un élément ressort et amortisseur, le logement (24) d'articulation de suspension étant formé par des ouvertures (25, 26) de palier dans les deux parois latérales (15, 16) espacées l'une de l'autre de la partie (10) de chambre creuse et par une ouverture (27) de palier dans le prolongement (9) de fixation, les ouvertures (25, 26) de palier dans les parois latérales (15, 16) et l'ouverture (27) de palier dans le prolongement (9) de fixation étant agencées coaxialement les unes par rapport aux autres.

2. Bras de suspension, qui présente un corps allongé (5) de bras, une coque (8) d'articulation à rotule étant agencée sur une première extrémité longitudinale (6) du corps (5) de bras, laquelle forme un premier point de liaison, le corps (5) de bras étant formé de tôle métallique, le corps (5) de bras étant composé de segments de coque sous forme de deux coques (11, 12) en tôle, et le corps (5) de bras présentant en coupe transversale verticale une hauteur (h) et une largeur (b), la hauteur (h) étant dimensionnée de manière supérieure à la largeur (b) du corps (5) de bras, et le corps (5) de bras présentant une partie (10) de chambre creuse, et la coque (8) d'articulation à rotule étant une pièce forgée ou moulée en métal et présentant un prolongement (9) de fixation, la coque (8) d'articulation à rotule venant en engagement avec le prolongement (9) de fixation dans la partie (10) de chambre creuse du corps (5) de bras et étant assemblée avec le corps (5) de bras, **caractérisé en ce qu'**un logement (20) de palier, qui forme un deuxième point de liaison, est prévu sur la deuxième extrémité longitudinale (7) opposée à la première extrémité longitudinale (6), le logement (20) de palier étant formé par des ouvertures (21, 22) de palier dans des parois latérales (15, 16) s'étendant à distance parallèlement l'une à l'autre dans la deuxième extrémité longitudinale (7), chaque ouverture (21, 22) de palier présentant une couronne périphérique dirigée vers l'intérieur en direction de l'espace intérieur du corps (5) de bras et le bras de suspension (1) présentant un troisième point de liaison sous forme d'un logement (24) d'articulation de suspension, lequel est conçu pour, et est destiné à, raccorder un élément ressort et amortisseur, le logement (24) d'articulation de suspension étant réalisé par des ouvertures (35, 36) de palier communiquant entre elles dans les parois latérales (15, 16) des coques (11, 12) en tôle du corps (5) de bras, les ouvertures (35, 36) de palier présentant chacune une couronne (37) dirigée vers l'intérieur sur tout le pourtour, lesquelles forment le siège de palier dans le logement (24) d'articulation de suspension, et le prolongement (9) de fixation se terminant devant le logement (24) d'articulation de suspension.

3. Bras de suspension selon la revendication 1 ou la revendication 2, **caractérisé en ce que** les parois latérales (15, 16) de la partie (10) de chambre creuse et le prolongement (9) de fixation sont en contact mutuel.

4. Bras de suspension selon l'une quelconque des revendications 1 à 3, **caractérisé en ce que** des flancs (33) d'appui sont réalisés sur le prolongement (9) de fixation, lesquels sont en contact avec des parties (34) d'appui prévues sur le corps (5) de bras.

5. Bras de suspension selon l'une quelconque des revendications 1 à 4, **caractérisé en ce que** le corps (5) de bras est configuré par endroits de manière rectangulaire dans la section transversale verticale.

6. Bras de suspension selon l'une quelconque des revendications 1 à 5, **caractérisé en ce que** le corps (5) de bras est configuré par endroits en forme de double T dans la section transversale verticale.

7. Bras de suspension selon l'une quelconque des revendications 1 à 6, **caractérisé en ce que** le corps (5) de bras présente au moins une nervure (14) orientée dans sa direction longitudinale.

8. Bras de suspension selon l'une quelconque des revendications 1 à 7, **caractérisé en ce que** le corps (5) de bras présente au moins un point de flexion théorique (38).

9. Bras de suspension selon l'une quelconque des revendications 1 à 8, **caractérisé en ce que** la coque (8) d'articulation à rotule et le corps (5) de bras sont assemblés par liaison de matière, en particulier par technique de soudage.

10. Bras de suspension selon l'une quelconque des revendications 1 à 9, **caractérisé en ce que** la coque (8) d'articulation à rotule et le corps (5) de bras sont assemblés par complémentarité de formes, en particulier par technique de rivetage.

11. Bras de suspension selon l'une quelconque des revendications 1 à 10, **caractérisé en ce que** le corps (5) de bras présente une limite d'élasticité apparente Rp0.2 comprise respectivement entre 480 et 880 MPa, une résistance à la traction Rm comprise respectivement entre 580 et 1 050 MPa et un allongement à la rupture min. A80mm >8 % et la coque d'articulation à rotule présente une limite d'élasticité apparente Rp0.2 comprise entre 400 et 600 MPa, une résistance à la traction Rm comprise entre 600 et 820 MPa et un allongement à la rupture min. A5 supérieur à >14 %.
